# FASCICULE DE BREVET EUROPEEN

(11) **EP 3 649 402 B1**
(45) Date de publication et mention de la délivrance du brevet: **21.04.2021**
(21) Numéro de dépôt: 18768926.0
(22) Date de dépôt: 17.08.2018
(51) Int. Cl.: F23R 3/02

(54) **MODULE DE CHAMBRE DE COMBUSTION DE TURBOMACHINE D'AERONEF COMPRENANT DES MARQUES FACILITANT LE REPERAGE LORS D'UNE INSPECTION ENDOSCOPIQUE DE LA CHAMBRE DE COMBUSTION**
BRENNKAMMERMODUL FÜR EIN FLUGZEUGTRIEBWERK MIT MARKIERUNGEN ZUR ERLEICHTERUNG DER IDENTIFIZIERUNG WÄHREND EINER ENDOSKOPISCHEN INSPEKTION DER BRENNKAMMER
COMBUSTION CHAMBER MODULE FOR AN AIRCRAFT TURBINE ENGINE COMPRISING MARKS FACILITATING IDENTIFICATION DURING ENDOSCOPIC INSPECTION OF THE COMBUSTION CHAMBER

(30) Priorité: 21.08.2017 FR 1757771
(43) Date de publication de la demande: 13.05.2020
(73) Titulaire: Safran Aircraft Engines, 75015 Paris (FR)
(72) Inventeur: BIDART, Olivier, Baptiste, 77550 Moissy-Cramayel (FR); DANCIE, Galadriel, 77550 Moissy-Cramayel (FR); LE PANNERER, Brice, Marie, Yves, Emile, 77550 Moissy-Cramayel (FR)
(74) Mandataire: Brevalex
(86) Numéro de dépôt international: PCT/FR2018/052071
(87) Numéro de publication internationale: WO 2019/038496

(56) Documents cités:
- EP-A2- 1 001 222
- US-A1- 2012 312 103
- US-A1- 2015 086 334

## Description

### DOMAINE TECHNIQUE

La présente invention se rapporte au domaine des turbomachines d'aéronef, et en particulier à celui des chambres de combustion ainsi qu'à celui des procédés d'inspection endoscopique de ces chambres.

### ETAT DE LA TECHNIQUE ANTERIEURE

Au cours d'un procédé d'inspection endoscopique d'une chambre de combustion, il peut s'avérer difficile de connaître la position exacte de l'endoscope, notamment lors de l'enregistrement d'une image. Cela conduit à introduire des doutes sur la position réelle des endommagements identifiés lors de l'inspection, et restitués dans un rapport endoscopique. Ces doutes peuvent rendre ce rapport inexploitable. Dans le domaine technique considéré, il est connu les documents EP 1001222, US 2015/086334 et US 2012/312103, mais aucun d'eux ne permet de répondre de manière entièrement satisfaisante au problème mentionné ci-dessus EP 1001222 divulgue un module de chambre de combustion selon le préambule de la revendication 1.

### EXPOSE DE L'INVENTION

Pour répondre au problème ci-dessus relatif aux réalisations de l'art antérieur, l'invention a tout d'abord pour objet un module de chambre de combustion pour turbomachine d'aéronef, comprenant une chambre de combustion délimitée par une paroi annulaire intérieure et une paroi annulaire extérieure pourvues d'orifices d'introduction d'air, ledit module comprenant également un carter intérieur ainsi qu'un carter extérieur entre lesquels sont agencées les parois annulaires intérieure et extérieure.
Selon l'invention, au moins l'un des carters intérieur et extérieur présente, sur sa surface en regard de la chambre de combustion, un système de marquage comprenant une pluralité de marques différentes espacées angulairement les unes des autres, chaque marque étant réalisée en regard de l'un des orifices d'introduction d'air afin d'être visible depuis l'intérieur de la chambre de combustion, et renseignant chacune sur la position angulaire d'une zone de la chambre de combustion comprenant ledit orifice d'introduction d'air.

L'invention est ainsi remarquable en ce qu'elle met à profit les trous d'introduction d'air habituellement pratiqués sur les chambres de combustion, en leur attribuant une nouvelle fonction d'accès visuels à des marques judicieusement positionnées sur le/les carters entourant la chambre de combustion. Ces marques deviennent ainsi facilement visibles depuis l'intérieur de la chambre, tout en étant réalisées à l'extérieur de cette chambre, à distance des zones sensibles d'agression.

Ainsi, lors d'un procédé d'inspection endoscopique, les marques sont visibles et permettent aux opérateurs de connaître la position exacte des endommagements identifiés à l'intérieur de la chambre. Les rapports endoscopiques peuvent alors faire état de ces marques, les rendant ainsi plus fiables et mieux exploitables. Cette solution permet également de constituer un système de marquage durable, exploitable non seulement par le fabriquant au moment de la réalisation et du contrôle de la chambre, mais également par tous les tiers intervenant sur la turbomachine au cours de la durée de vie de celle-ci.

L'invention prévoit également au moins l'une quelconque des caractéristiques techniques optionnelles suivantes, prises isolément ou en combinaison.

De préférence, les marques sont des chiffres et/ou des lettres. Cependant, d'autres types de marques sont possibles, sans sortir du cadre de l'invention.

La chambre est également délimitée par un fond de chambre équipé d'une pluralité de dispositifs d'injection de carburant se succédant selon la direction circonférentielle de la chambre, et le nombre de marques est identique au nombre de dispositifs d'injection de carburant.

Les marques sont réalisées radialement en regard des orifices d'introduction d'air, de préférence des orifices primaires et/ou des orifices de dilution.

L'invention a également pour objet une turbomachine d'aéronef comprenant un tel module de chambre de combustion.

Enfin, l'invention a pour objet un procédé d'inspection endoscopique d'une chambre de combustion d'un tel module de chambre de combustion, comprenant les étapes successives suivantes :
- introduction d'un endoscope à l'intérieur de la chambre de combustion ;
- réalisation d'un contrôle visuel indirect de la chambre de combustion à l'aide de l'endoscope ; et
- enregistrement d'au moins une image de la chambre de combustion en associant à cette image une position angulaire à l'aide d'au moins l'une des marques présentes sur le/les carters intérieur et extérieur du module de chambre de combustion.

De préférence, ladite association de la marque à l'image s'effectue :
- en faisant en sorte de rendre la marque visible sur l'image enregistrée, et/ou
- en repérant avant ou après l'enregistrement de l'image, à l'aide de l'endoscope, la marque de la zone de la chambre de combustion correspondant à ladite image.

D'autres avantages et caractéristiques de l'invention apparaîtront dans la description détaillée non limitative ci-dessous.

### BREVE DESCRIPTION DES DESSINS

Cette description sera faite au regard des dessins annexés parmi lesquels ;
- la figure 1 représente une vue schématique d'un turboréacteur selon l'invention, en coupe longitudinale ;
- la figure 2 représente une vue en demi-coupe longitudinale du module de chambre de combustion équipant le turboréacteur montré sur la figure précédente ;
- la figure 3 est une vue prise radialement depuis l'intérieur de la chambre de combustion du module de la figure précédente ;
- la figure 4 est une autre vue prise depuis l'intérieur de la chambre, en direction du fond de chambre ; et
- la figure 5 est une vue schématique développée d'une partie du module de chambre de combustion montré sur les figures précédentes.

### EXPOSE DETAILLE DE MODES DE REALISATION PREFERES

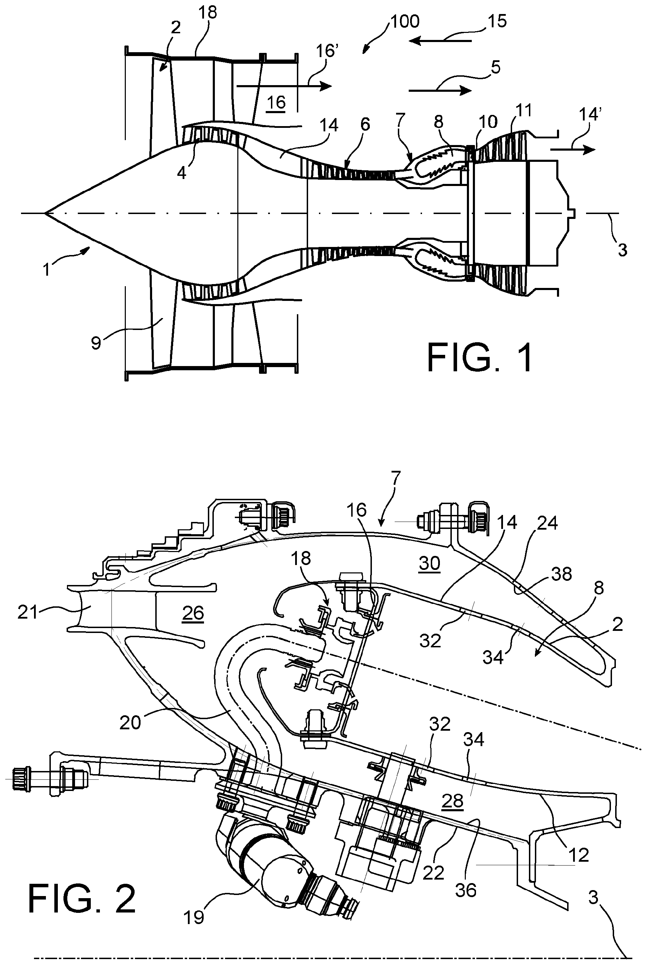

En référence tout d'abord à la figure 1, il est représenté une turbomachine 100 d'aéronef selon l'invention. Il s'agit ici d'un turboréacteur à double flux et à double corps. Néanmoins, il pourrait s'agir d'une turbomachine d'un autre type, par exemple un turbopropulseur, sans sortir du cadre de l'invention.

La turbomachine 100 présente un axe longitudinal 3 autour duquel s'étendent ses différents composants. Elle comprend, d'amont en aval selon une direction principale 5 d'écoulement des gaz à travers cette turbomachine, une soufflante 2, un compresseur basse pression 4, un compresseur haute pression 6, une chambre de combustion 8 intégrée à un module de chambre de combustion 7, une turbine haute pression 10 et une turbine basse pression 11. Ces éléments délimitent une veine primaire 14 traversée par un flux primaire 14', tandis qu'une veine secondaire 16 entoure la veine primaire en étant délimitée partiellement par un carter de soufflante 18 et traversée par un flux d'air secondaire 16'.

Dans la description qui va suivre, les termes « avant » et « arrière » sont considérés selon une direction 15 opposée à la direction principale 5 d'écoulement des gaz au sein du turboréacteur, et parallèle à l'axe 3. En revanche, les termes « amont » et « aval » sont considérés selon cette même direction principale d'écoulement 5.

En référence à présent aux figures 2 à 4, il va être décrit de façon plus détaillée le module de chambre de combustion 7, spécifique à la présente invention.

Il est tout d'abord noté que le cœur du module 7 est formé par la chambre de combustion 8 elle-même, de forme annulaire centrée sur l'axe 3. Cette chambre est délimitée radialement par une paroi annulaire intérieure 12 et une paroi annulaire extérieure 14, centrées sur l'axe 3. A l'avant, elle est délimitée par un fond de chambre 16 équipé d'une pluralité de dispositifs d'injection de carburant 18, répartis circonférentiellement le long du fond 16, la direction circonférentielle étant ici en rapport avec l'axe longitudinal 3 de la turbomachine. Chaque dispositif d'injection 18 est associé à un injecteur de carburant 19, dont la canne 20 traverse une partie de ce dispositif, destiné à assurer un mélange d'air et de carburant.

La chambre de combustion 8 est logée dans un espace défini vers l'amont par une tuyère 21. Celle-ci se scinde ensuite vers l'aval en un carter intérieur 22 et un carter extérieur 24, entre lesquels sont agencés radialement les deux parois annulaires 12, 14 de la chambre. La tuyère 21 définit vers l'aval une chambre de diffusion 26, qui se scinde ensuite en un espace annulaire intérieur 28 de circulation d'air, et en un espace annulaire extérieur 30 de circulation d'air.

De manière connue, l'espace 28 permet l'introduction d'air au sein de la chambre de combustion 8, via des orifices d'introduction d'air prévus à travers la paroi annulaire intérieure 12. Il s'agit de trous primaires 32, et de trous de dilution 34 situés plus en aval. Il en est de même pour l'espace 30, qui permet l'introduction d'air au sein de la chambre de combustion 8, via des trous primaires 32 et des trous de dilution 34 prévus à travers la paroi annulaire extérieure 14.

L'une des particularités de l'invention réside dans la présence d'un système de marquage sur au moins l'un des deux carters 22, 24. A cet égard, il est noté que le système de marquage qui sera décrit ci-après est associé à la paroi annulaire intérieure 12 de la chambre, en étant réalisé sur une surface extérieure 36 du carter intérieur 22. Alternativement ou simultanément, un autre système de marquage identique ou similaire pourrait être associé à la paroi annulaire extérieure 14 de la chambre, en étant réalisé sur une surface intérieure 38 du carter extérieur 24.

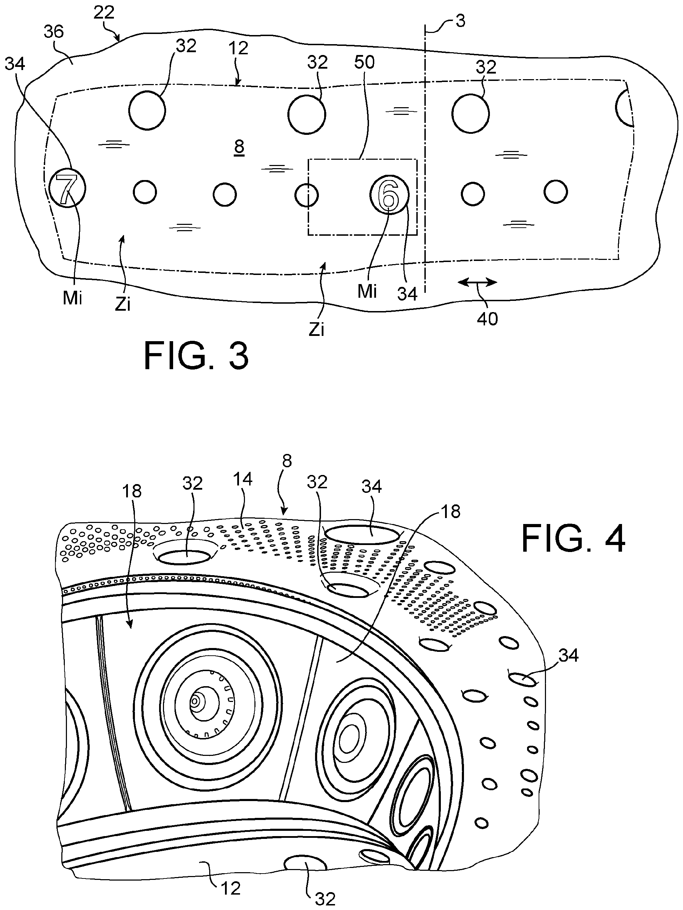

Comme cela est le mieux visible sur la figure 3 prise radialement vers l'intérieur depuis l'intérieur de la chambre 8, le système de marquage comprenant une pluralité de marques différentes Mᵢ espacées angulairement les unes des autres, selon la direction circonférentielle 40. Sur cette figure 3, deux marques Mᵢ sont visibles, sous la forme des chiffres « 6 » et « 7 » représentés en traits plus épais que ceux des références numériques associés aux éléments de l'invention. Ces chiffres Mᵢ forment ainsi des marques ou repères, en étant réalisés par exemple par gravure sur la surface extérieure 36 du carter intérieur 22. Elles sont ici chacune réalisée en regard radialement de l'un des orifices de dilution 34. Néanmoins, il pourrait alternativement ou simultanément être utilisé les orifices primaires 32 pour bénéficier d'un accès visuel aux marques Mᵢ, sans sortir du cadre de l'invention.

De cette manière, chaque marque Mᵢ renseigne sur la position angulaire d'une zone Zᵢ de la chambre de combustion comprenant l'orifice de dilution associé à cette marque Mᵢ. En effet, lorsqu'un endoscope 50 est introduit au sein de la chambre 8 pour un contrôle visuel indirect de la paroi annulaire intérieure 12 et/ou du fond de chambre et de ses dispositifs d'injection 18, l'endoscope peut aisément repérer la zone Zᵢ concernée, en orientant son axe optique radialement à travers un orifice de dilution 34 pour y visualiser la marque Mᵢ.

Ainsi, lors d'un procédé d'inspection de la chambre à l'aide de l'endoscope 50, il peut être réalisé l'enregistrement d'au moins une image de cette chambre en associant à cette image une position angulaire à l'aide d'au moins l'une des marques Mᵢ présentes sur la surface extérieure 36 du carter intérieur 22. Cette association peut s'effectuer en rendant la marque Mᵢ visible sur l'image enregistrée, et/ou en repérant avant ou après l'enregistrement de l'image, à l'aide de l'endoscope 50, la marque Mᵢ de la zone Zᵢ correspondant à l'image. Dans ce dernier cas, la marque Mᵢ n'est pas nécessairement visible sur l'image, mais elle peut être précisée dans le rapport endoscopique pour une meilleure exploitation ultérieure de ce rapport.

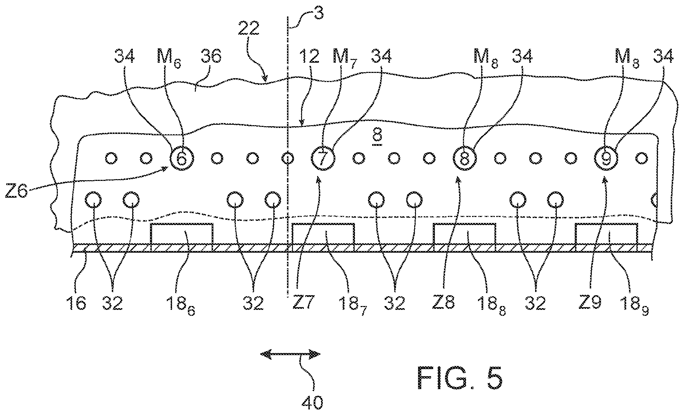

Sur la vue développée de la figure 5, il est montré que le nombre de marques Mᵢ correspond de préférence au nombre de dispositifs d'injection. En effet, un orifice de dilution 34 est centré axialement sur chaque dispositif d'injection, et il y est rattaché le même repère angulaire. En d'autres termes, le sixième dispositif d'injection 18₆ se situe axialement dans l'alignement d'un orifice de dilution 34 auquel est associé la marque M₆ indiquant le chiffre « 6 » correspondant à la zone Z₆ de la chambre, de même que le septième dispositif d'injection 18₇ se situe axialement dans l'alignement d'un orifice de dilution 34 auquel est associé la marque M₇ indiquant le chiffre « 7 » correspondant à la zone Z₇ de la chambre, et ainsi de suite pour les marques M₈, M₉, etc.

## Revendications

1. Module de chambre de combustion (7) pour turbomachine d'aéronef, comprenant une chambre de combustion (8) délimitée par une paroi annulaire intérieure (12) et une paroi annulaire extérieure (14) pourvues d'orifices d'introduction d'air (32, 34), ledit module comprenant également un carter intérieur (22) ainsi qu'un carter extérieur (24) entre lesquels sont agencées les parois annulaires intérieure et extérieure (12, 14),
**caractérisé en ce qu'**au moins l'un des carters intérieur et extérieur (22, 24) présente, sur sa surface en regard de la chambre de combustion, un système de marquage comprenant une pluralité de marques différentes (Mᵢ) espacées angulairement les unes des autres, chaque marque (Mᵢ) étant réalisée en regard de l'un des orifices d'introduction d'air (32, 34) afin d'être visible depuis l'intérieur de la chambre de combustion (8), et renseignant chacune sur la position angulaire d'une zone (Zᵢ) de la chambre de combustion comprenant ledit orifice d'introduction d'air.

2. Module de chambre de combustion selon la revendication 1, **caractérisé en ce que** les marques (Mᵢ) sont des chiffres et/ou des lettres.

3. Module de chambre de combustion selon la revendication 1 ou la revendication 2, **caractérisé en ce que** la chambre (8) est également délimitée par un fond de chambre (16) équipé d'une pluralité de dispositifs d'injection de carburant (18) se succédant selon la direction circonférentielle (40) de la chambre, et **en ce que** le nombre de marques (Mᵢ) est identique au nombre de dispositifs d'injection de carburant (18).

4. Module de chambre de combustion selon l'une quelconque des revendications précédentes, **caractérisé en ce que** les marques (Mᵢ) sont réalisées radialement en regard des orifices d'introduction d'air (32, 34), de préférence des orifices primaires (32) et/ou des orifices de dilution (34).

5. Turbomachine (100) d'aéronef comprenant un module de chambre de combustion (7) selon l'une quelconque des revendications précédentes.

6. Procédé d'inspection endoscopique d'une chambre de combustion (8) d'un module (7) selon l'une quelconque des revendications 1 à 4, **caractérisé en ce qu'**il comprend les étapes successives suivantes :
- introduction d'un endoscope (50) à l'intérieur de la chambre de combustion (8) ;
- réalisation d'un contrôle visuel indirect de la chambre de combustion à l'aide de l'endoscope (50) ; et
- enregistrement d'au moins une image de la chambre de combustion en associant à cette image une position angulaire à l'aide d'au moins l'une des marques (Mᵢ) présentes sur le/les carters intérieur et extérieur (22, 24) du module de chambre de combustion.

7. Procédé d'inspection selon la revendication précédente, **caractérisée en ce que** ladite association de la marque (Mᵢ) à l'image s'effectue :
- en faisant en sorte de rendre la marque (Mᵢ) visible sur l'image enregistrée, et/ou
- en repérant avant ou après l'enregistrement de l'image, à l'aide de l'endoscope, la marque (Mᵢ) de la zone (Zᵢ) de la chambre de combustion correspondant à ladite image.

## Patentansprüche

1. Brennkammermodul (7) für ein Flugzeugtriebwerk, mit einer Brennkammer (8), die durch eine ringförmige Innenwand (12) und eine ringförmige Außenwand (14) begrenzt ist, welche mit Luftzufuhröffnungen (32, 34) versehen sind, wobei das Modul außerdem ein Innengehäuse (22) sowie ein Außengehäuse (24) aufweist, zwischen welchen die ringförmigen Innen- und Außenwände (12, 14) angeordnet sind,
**dadurch gekennzeichnet, dass** mindestens eines der Innen- und Außengehäuse (22, 24) auf seiner Oberfläche gegenüber der Brennkammer ein Markierungssystem mit einer Mehrzahl unterschiedlicher Markierungen (Mᵢ) aufweist, welche winkelförmig voneinander beabstandet sind, wobei jede Markierung (Mᵢ) gegenüber der einen der Luftzufuhröffnungen (32, 34) ausgeführt ist, so dass sie vom Inneren der Brennkammer (8) aus sichtbar ist, und jede die Winkelposition eines Bereiches (Zᵢ) der Brennkammer angibt, die die Luftzufuhröffnung aufweist.

2. Brennkammermodul nach Anspruch 1, **dadurch gekennzeichnet, dass** die Markierungen (Mᵢ) aus Zahlen und/oder Buchstaben bestehen.

3. Brennkammermodul nach Anspruch 1 oder Anspruch 2, **dadurch gekennzeichnet, dass** die Kammer (8) auch durch einen Kammerboden (16) begrenzt wird, der mit einer Mehrzahl von Treibstoffeinspritzvorrichtungen (18) versehen ist, welche sich in der Umfangsrichtung (40) der Kammer aneinanderreihen, und dass die Anzahl von Markierungen (Mᵢ) identisch mit der Anzahl von Treibstoffeinspritzvorrichtungen (18) ist.

4. Brennkammermodul nach einem der vorhergehenden Ansprüche, **dadurch gekennzeichnet, dass** die Markierungen (Mᵢ) radial gegenüber den Luftzufuhröffnungen (32, 34), vorzugsweise den ersten Öffnungen (32) und/oder den Verdünnungsöffnungen (34), ausgeführt sind.

5. Turbotriebwerk (100) eines Luftfahrzeugs mit einem Brennkammermodul (7) nach einem der vorhergehenden Ansprüche.

6. Verfahren zur endoskopischen Inspektion einer Brennkammer (8) eines Moduls (7) nach einem der Ansprüche 1 bis 4, **dadurch gekennzeichnet, dass** es die folgenden aufeinanderfolgenden Schritte aufweist:
- Einführung eines Endoskops (50) in das Innere der Brennkammer (8);
- Durchführung einer indirekten Sichtprüfung der Brennkammer mithilfe des Endoskops (50); sowie
- Aufzeichnung von mindestens einem Bild der Brennkammer, indem mit diesem Bild eine Winkelposition mithilfe von mindestens einer der Markierungen (Mᵢ) verknüpft wird, welche auf dem/den Innen- und Außengehäuse(n) (22, 24) des Brennkammermoduls dargestellt sind.

7. Verfahren zur Inspektion nach dem vorhergehenden Anspruch, **dadurch gekennzeichnet, dass** die Verknüpfung der Markierung (Mᵢ) mit dem Bild erfolgt:
- indem dafür gesorgt wird, dass die Markierung (Mᵢ) in dem aufgezeichneten Bild sichtbar gemacht wird, und/oder
- indem vor oder nach der Aufzeichnung des Bildes mithilfe des Endoskops die Markierung (Mᵢ) des Bereiches (Zᵢ) der Brennkammer entsprechend dem Bild identifiziert wird.

## Claims

1. Combustion chamber module (7) for an aircraft turbine engine, comprising a combustion chamber (8) defined by an inner annular wall (12) and an outer annular wall (14) provided with air inlet orifices (32, 34), said module also comprising an inner casing (22) as well as an outer casing (24) between which the inner and outer annular walls (12, 14) are arranged,
**characterised in that** at least one of the inner and outer casings (22, 24) has, on its surface facing the combustion chamber, a marking system comprising a plurality of different marks (Mᵢ) angularly spaced apart from each other, each mark (Mᵢ) being made facing one of the air inlet orifices (32, 34) in order to be visible from the inside of the combustion chamber (8), and each informing on the angular position of a zone (Zᵢ) of the combustion chamber comprising said air inlet orifice.

2. Combustion chamber module according to claim 1, **characterised in that** the marks (Mᵢ) are numbers and/or letters.

3. Combustion chamber module according to claim 1 or claim 2, **characterised in that** the chamber (8) is also defined by a chamber endwall (16) provided with a plurality of fuel-injection devices (18) in succession in the circumferential direction (40) of the chamber, and **in that** the number of marks (Mᵢ) is identical to the number of fuel-injection devices (18).

4. Combustion chamber module according to any one of the previous claims, **characterised in that** the marks (Mᵢ) are made radially facing the air inlet orifices (32, 34), preferably the primary orifices (32) and/or the dilution orifices (34).

5. Aircraft turbine engine (100) comprising a combustion chamber module (7) according to any one of the previous claims.

6. Method for endoscopic inspection of a combustion chamber (8) of a module (7) according to any one of claims 1 to 4, **characterised in that** it comprises the following successive steps:
- inserting an endoscope (50) into the combustion chamber (8);
- performing an indirect visual check of the combustion chamber using the endoscope (50); and
- recording at least one image of the combustion chamber while associating with this image an angular position using at least one of the marks (Mᵢ) present on the inner and outer casing(s) (22, 24) of the combustion chamber module.

7. Inspection method according to the previous claim, **characterised in that** said association of the mark (Mᵢ) with the image is carried out:
- by making the mark (Mᵢ) visible on the recorded image, and/or
- by identifying before or after the recording of the image, using the endoscope, the mark (Mᵢ) of the zone (Zᵢ) of the combustion chamber corresponding to said image.
